# EUROPÄISCHE PATENTANMELDUNG

(11) **EP 0 600 479 A1**
(43) Veröffentlichungstag der Anmeldung: **08.06.1994**
(21) Anmeldenummer: 93119429.4
(22) Anmeldetag: 02.12.1993
(51) Int. Cl.: C07F 7/12

(54) **Verfahren zur Herstellung von Dimethylchlorsilan**

(30) Priorität: 03.12.1992 DE 4240730
(71) Anmelder: Wacker-Chemie GmbH, D-81737 München (DE)
(72) Erfinder: Geisberger, Gilbert, Dr., D-84503 Altötting (DE)

(57) **Zusammenfassung**

Es wird ein Verfahren beschrieben zur Herstellung von Dimethylchlorsilan durch Komproportionierung von Dimethyldichlorsilan mit Methylchlorsilan und/oder Methylsilan in Gegenwart eines Katalysators, wobei als Katalysator ein ungeformter oder ein in Kugelform vorliegender Katalysator verwendet wird, der eine polymere, gegebenenfalls vernetzte Organosiloxanammoniumverbindung mit kieselsäureartigem Grundgerüst ist.

## Beschreibung

Die Erfindung betrifft ein Verfahren zur Herstellung von Dimethylchlorsilan durch Komproportionierung von Dimethyldichlorsilan mit Methylchlorsilan und/oder Methylsilan in Gegenwart eines Katalysators.

Bei der sogenannten Direktsynthese, einem Verfahren, bei dem Siliciumpulver mit Methylchlorid in Gegenwart eines Kupferkatalysators umgesetzt wird, fallen neben dem Hauptprodukt Dimethyldichlorsilan auch weitere Silane an, wie Dimethylchlorsilan, das aber nur in geringen Ausbeuten erhalten wird.

Gemäß US-A 3,399,222 liegt bei der Komproportionierung von Dimethyldichlorsilan mit Methyldichlorsilan in Gegenwart von quaternären Ammoniumsalzen das folgende Gleichgewicht auf der linken Seite: 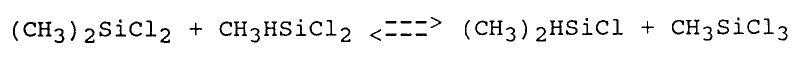
In US-A 4,870,200 ist die Disproportionierung von Methyldichlorsilan zu Methylchlorsilan und/oder Methylsilan in Gegenwart eines Katalysators, bestehend aus einem im Reaktionsmedium unlöslichen Träger, auf dem tertiäre Amingruppen oder quaternäre Ammoniumgruppen kovalent gebunden sind, beschrieben.

In der deutschen Patentanmeldung der Anmelderin mit dem Aktenzeichen P 42 08 152.1 ist ein Verfahren zur Herstellung von Dimethylchlorsilan durch Komproportionierung von Dimethyldichlorsilan mit Methylchlorsilan und/oder Methylsilan in Gegenwart eines Katalysators, bestehend aus einem im Reaktionsmedium unlöslichen Träger, auf dem tertiäre Amingruppen oder quaternäre Ammoniumgruppen kovalent gebunden sind, beschrieben.

Aus US-A 4,410,669 und US-A 5,130,396 sind ungeformte und kugelförmige polymere, gegebenenfalls vernetzte Organosiloxanammoniumverbindungen mit kieselsäureartigem Grundgerüst und deren Verwendung als Ionenaustauscher bekannt.

In US-A 5,094,831 ist ein Verfahren zur Dismutierung von Chlorsilanen beschrieben, bei dem diese gasförmig oder flüssig über einen ungeformten oder in Form von Kügelchen vorliegenden Katalysator aus einer von vier verschiedenen, im wesentlichen eine Amino- oder Ammoniumgruppierung als funktionelle Gruppe tragenden, gegebenenfalls vernetzten Organopolysiloxanverbindungen geleitet werden.

Es bestand die Aufgabe, ein Verfahren zur Herstellung von Dimethylchlorsilan durch Komproportionierung von Dimethyldichlorsilan mit mindestens einem Silan mit Si-gebundenen Methylgruppen, Wasserstoff- und/oder Chloratomen in Gegenwart eines Katalysators bereitzustellen, bei dem gute Ausbeuten an Dimethylchlorsilan erhalten werden, bei dem die Komproportionierung unter heterogener Katalyse erfolgt, der Katalysator leicht aus der Reaktionsmischung abgetrennt und rückgewonnen werden kann und die kontinuierliche Verfahrensweise möglich ist.

Gegenstand der Erfindung ist ein Verfahren zur Herstellung von Dimethylchlorsilan durch Komproportionierung von Dimethyldichlorsilan mit Methylchlorsilan und/oder Methylsilan in Gegenwart eines Katalysators, dadurch gekennzeichnet, daß als Katalysator ein ungeformter oder ein in Kugelform vorliegender Katalysator verwendet wird, der eine polymere, gegebenenfalls vernetzte Organosiloxanammoniumverbindung mit kieselsäureartigem Grundgerüst ist, bestehend aus Einheiten der allgemeinen Formel 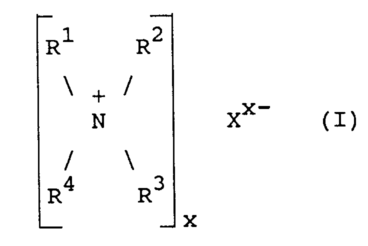
in welcher R¹ und R² gleich oder verschieden sind und eine Gruppe der allgemeinen Formel 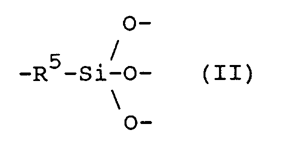
bedeuten, wobei die Stickstoffatome in (I) über die Reste R⁵ mit den Siliciumatomen in (II) verbunden sind und R⁵ eine Alkylengruppe mit 1 bis 10 Kohlenstoffatomen, eine Cycloalkylengruppe mit 5 bis 8 Kohlenstoffatomen oder eine Einheit der allgemeinen Formel 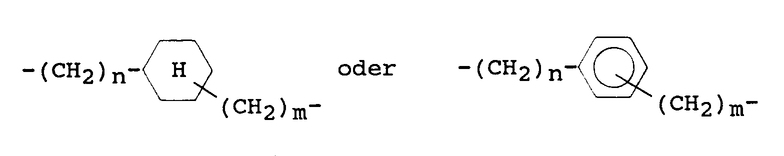
darstellt, in der n eine Zahl von 1 bis 6 ist und die Zahl der stickstoffständigen Methylengruppen angibt und m eine Zahl von 0 bis 6 ist, und wobei die freien Valenzen der an das Siliciumatom gebundenen Sauerstoffatome wie bei Kieselsauregerüsten durch Siliciumatome weiterer Gruppen der Formel (II) und/oder mit den Metallatomen einer oder mehrerer der vernetzenden Brückenglieder 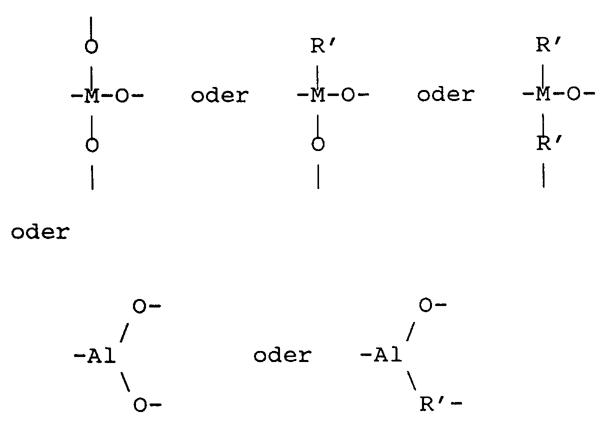
abgesättigt sind, wobei M ein Silicium-, Titan- oder Zirkoniumatom und R' eine lineare oder verzweigte Alkylgruppe mit 1 bis 5 Kohlenstoffatomen ist und das Verhältnis der Siliciumatome aus den Gruppen der allgemeinen Formel (II) zu den Metallatomen in den Brückengliedern 1 : 0 bis 1 : 10 beträgt, und in welcher R³ und/oder R⁴ gleich R¹ und R² ist oder Wasserstoff, eine lineare oder verzweigte Alkylgruppe aus 1 bis 20 Kohlenstoffatomen, eine aus 5 bis 8 Kohlenstoffatomen bestehende Cycloalkylgruppe oder die Benzylgruppe ist, und X ein Anion mit der Wertigkeit von x gleich 1 bis 3 aus der Gruppe Halogenid, Hydroxid, Hypochlorit, Sulfat, Hydrogensulfat, Nitrit, Nitrat, Phosphat, Dihydrogenphosphat, Hydrogenphosphat, Carbonat, Hydrogencarbonat, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluoroborat, Tetraphenylborat, Hexafluorophosphat, Formiat, Acetat, Propionat, Oxalat, Trifluoroacetat, Trichloracetat oder Benzoat ist.

Der beim erfindungsgemäßen Verfahren eingesetzte ungeformter Katalysator besitzt eine spezifische Oberfläche von vorzugsweise 0,1 bis 2000 m²/g und einen Teilchendurchmesser von vorzugsweise 0,01 bis 3,0 mm. Der beim erfindungsgemäßen Verfahren eingesetzte in Kugelform vorliegende Katalysator besitzt einen Teilchendurchmesser von vorzugsweise 0,8 bis 2,0 mm, eine spezifische Oberfläche von vorzugsweise 0 bis 1000 m²/g, ein spezifisches Porenvolumen von vorzugsweise 0 bis 5,0 ml/g, eine Schüttdichte von vorzugsweise 50 bis 1000 g/l und eine volumenbezogene Trockensubstanz nach DIN 54 408 von vorzugsweise 50 bis 750 g/l.

Das erfindungsgemäße Verfahren hat den Vorteil, daß bei der Komproportionierung ein Austausch von Si-gebundenen Chloratomen und Wasserstoffatomen, aber kein Austausch von Si-gebundenen Methylgruppen erfolgt.

Bei dem erfindungsgemäßen Verfahren wird als Katalysator bevorzugt eine Verbindung, aufgebaut aus Polymereinheiten der Formel

[(H₃C)N(CH₂CH₂CH₂SiO_{3/2})₃]⁺Cl⁻

eingesetzt.

Die bei dem erfindungsgemäßen Verfahren eingesetzten Katalysatoren sind hinsichtlich ihrer Zusammensetzung und Herstellbarkeit in der US-A 4,410,669 und US-A 5,130,396 beschrieben und die darin genannten Verbindungen sowie deren Herstellung gehören daher zum Inhalt der Offenbarung der Anmeldung.

Vorzugsweise wird das bei dem erfindungsgemäßen Verfahren eingesetzte Methylchlorsilan und/oder Methylsilan durch Disproportionierung von Methyldichlorsilan in Gegenwart eines Katalysators hergestellt. Beispiele für Katalysatoren sind tertiäre Amine, quaternäre Ammoniumsalze, wie Methyltrioctylammoniumchlorid, und solche Katalysatoren, bestehend aus einem im Reaktionsmedium unlöslichen Träger, auf dem tertiäre Amingruppen oder quaternäre Ammoniumgruppen kovalent gebunden sind, wie in US-A 4,870,200, beschrieben.

Methyldichlorsilan fällt bei der sogenannten Direktsynthese neben dem Hauptprodukt Dimethyldichlorsilan an.

Methylchlorsilan und Methylsilan kann auch nach anderen Verfahren hergestellt werden.

Das bei dem erfindungsgemäßen Verfahren eingesetzte Methylsilan kann beispielsweise aus Methylhydrogensiloxanen nach dem in E.L. Zicky, J. Organometal. Chem. 4, 411-412 (1965), beschriebenen Verfahren oder durch Hydrierung von Methylchlorsilanen mit Metallhydriden gemäß W. Noll, Chemie und Technologie der Silicone, Verlag Chemie, Weinheim, 2. Auflage, Seiten 76 bis 77, 1968, hergestellt werden.

Das erfindungsgemäße Verfahren wird in heterogener Phase durchgeführt.

Die Edukte Dimethyldichlorsilan sowie Methylchlorsilan und/oder Methylsilan werden bevorzugt gasförmig eingesetzt. Sie können aber auch in flüssiger Form oder gelöst in einem inerten organischen Lösungsmittel, wie Hexan, Toluol, Xylol oder Chlorbenzol, eingesetzt werden.

Bei der Reaktion in der Gasphase wird der feste Katalysator vorzugsweise in feinverteilter Form in einem Fest- oder Wirbelbett oder in Kugelform vorliegend in einem thermostatisierten Rohr eingesetzt.

Bei der Anordnung des Katalysators in einem Fest- oder Wirbelbett wird gasförmiges Methylchlorsilan und/oder Methylsilan mit gasförmigem Dimethyldichlorsilan bei einem Druck von vorzugsweise 0,1 bis 15 bar, bevorzugt 1 bis 5 bar, und einer Temperatur von vorzugsweise 0 bis 300°C, bevorzugt 70 bis 150°C, durch ein Fest- oder Wirbelbett, bestehend aus dem Katalysator, geleitet, das erhaltene Reaktionsgemisch kondensiert, durch fraktionierte Destillation aufgetrennt und so das Dimethylchlorsilan erhalten. Vorzugsweise wird dabei das in einer Rektifikationskolonne bei der Disproportionierung des Methyldichlorsilans anfallende Kopfprodukt Methylsilan, Methylchlorsilan oder ein Gemisch aus Methylsilan und Methylchlorsilan eingesetzt, wobei die Disproportionierung unter homogener oder heterogener Katalyse in Gegenwart von tertiären Aminen, quaternären Ammoniumsalzen und solchen Katalysatoren, die aus im Reaktionsmedium unlöslichen Trägern, auf dem tertiäre Amingruppen oder quaternäre Ammoniumgruppen kovalent gebunden sind (beispielsweise wie in US-A 4,870,200 beschrieben) bestehen, durchgeführt wird.

Bei der Anordnung des Katalysators als Formkörper in einem thermostatierten Rohr wird Methylchlorsilan und/oder Methylsilan zusammen mit Dimethyldichlorsilan bei einem Druck von vorzugsweise 0,1 bis 20 bar, bevorzugt 1 bis 5 bar, und einer Temperatur von vorzugsweise 0 bis 250°C, bevorzugt 70 bis 150°C, geleitet. Das erhaltene Reaktionsgemisch wird anschließend durch fraktionierte Destillation aufgetrennt. Vorzugsweise wird dabei das in einer Rektifikationskolonne bei der Disproportionierung des Methyldichlorsilans anfallende Kopfprodukt Methylsilan, Methylchlorsilan oder ein Gemisch aus Methylsilan und Methylchlorsilan eingesetzt, wobei die Disproportionierung unter homogener oder heterogener Katalyse in Gegenwart von tertiären Aminen, quaternären Ammoniumsalzen und solchen Katalysatoren, die aus im Reaktionsmedium unlöslichen Trägern, auf dem tertiäre Amingruppen oder quaternäre Ammoniumgruppen kovalent gebunden sind (beispielsweise wie in US-A 4,870,200 beschrieben) bestehen, durchgeführt wird.

Das erfindungsgemäße Verfahren kann absatzweise, halbkontinuierlich oder vollkontinuierlich durchgeführt werden. Vorzugsweise wird es vollkontinuierlich durchgeführt.

Dimethylchlorsilan ist eine wertvolle Ausgangsverbindung zur Herstellung von funktionellen Silanen oder Siloxanen über die Hydrosilylierung von aliphatische Doppel- oder Dreifachbindung aufweisenden organischen Verbindungen und zur Herstellung von Dimethylhydrogensilylgruppen aufweisenden Organopolysiloxanen, die bei additionsvernetzenden Siliconkautschukzusammensetzungen verwendet werden.

Auch das als Nebenprodukt, hauptsächlich bei der Disproportionierung von Methyldichlorsilan, anfallende Methyltrichlorsilan kann auf wirtschaftliche Weise verwertet werden, beispielsweise zur Herstellung von Methylsiliconharzen und zur Herstellung von durch Flammenhydrolyse erzeugter hochdisperser Kieselsäure.

### Beispiele 1 bis 4:

Folgende Katalysatoren wurden verwendet:
a) Für Beispiel 1:
Kugelförmige polymere Organosiloxan-Ammoniumverbindung aus Einheiten der Formel:

[(H₃C)N(CH₂CH₂CH₂SiO_{3/2})₃]⁺Cl⁻

(käuflich erwerblich unter dem Handelsnamen DELOXAN^{R} AMPI-1 bei der Fa. Degussa)

| | |
|---|---|
| Korngröße | 0,3 bis 1,4 mm |
| spezifische Oberfläche (BET) | < 100 m²/g |
| Schüttdichte | 700 - 800 g/l |
| volumenbezogene Trockensubstanz nach DIN 54 408 | 550 - 630 g/l |

b) Für Beispiel 2:
Kugelförmige polymere Organosiloxan-Ammoniumverbindung aus Einheiten der Formel:

[(H₃C)N(CH₂CH₂CH₂SiO_{3/2})₃]⁺Cl⁻

(käuflich erwerblich unter dem Handelsnamen DELOXAN^{R} AMPI-2 bei der Fa. Degussa)
Korngröße 1,0 bis 1,8 mm.
c) Für Beispiel 3:
Kugelförmige polymere Organosiloxan-Ammoniumverbindung aus Einheiten der Formel:

[(H₃C)N(CH₂CH₂CH₂SiO_{3/2})₃]⁺Cl⁻

(käuflich erwerblich unter dem Handelsnamen DELOXAN^{R} AMPI-3 bei der Fa. Degussa)

| | |
|---|---|
| Korngröße | 0,6 bis 1,2 mm |
| spezifische Oberfläche (BET) | 200 - 300 m²/g |
| Schüttdichte | 450 - 550 g/l |
| volumenbezogene Trockensubstanz nach DIN 54 408 | 250 - 350 g/l. |

d) Für Beispiel 4:
Kugelförmige polymere Organosiloxan-Ammoniumverbindung aus Einheiten der Formel:

[(H₃C)N(CH₂CH₂CH₂SiO_{3/2})₃]⁺Cl⁻

(käuflich erwerblich unter dem Handelsnamen DELOXAN^{R} AMPIa-3 bei der Fa. Degussa)

| | |
|---|---|
| Korngröße | 0,4 bis 1,0 mm |
| spezifische Oberfläche (BET) | 460 - 500 m²/g |

Die Herstellung der in den Beispielen 1 bis 4 eingesetzten Katalysatoren ist in US-A 5,130,396 Beispiel 1 und/oder 2 beschrieben.

Die oben beschriebenen kugelförmigen Katalysatoren wurden jeweils in ein thermostatisiertes Rohr von 2,4 cm Durchmesser in einer Schütthöhe von 15 cm eingefüllt. Die in Gasform durchgeleiteten Silan-Mengen und -Zusammensetzungen wurden variiert, die aus dem Reaktionsrohr austretenden Produktzusammensetzungen kondensiert und ¹H-NMR-spektroskopisch analysiert. Die Versuchsbedingungen und Ergebnisse sind in der folgenden Tabelle zusammengefaßt.

Die in den Beispielen 1 bis 4 verwendeten MeSiH₃ und MeSiH₃/MeSiH₂Cl-Gemische wurden nach dem in US-A 4,870,200, Beispiel 3, beschriebenen Verfahren hergestellt.

**Tabelle**

| | Beispiele | | | |
|---|---|---|---|---|
| | 1 | 2 | 3 | 4 |
| Edukte (Mol-%): | | | | |
| MeSiH₃ | 45,5 | 28,1 | 20,4 | 14,5 |
| MeSiH₂Cl | - | 6,9 | 5,0 | 3,0 |
| Me₂SiCl₂ | 55,5 | 65,0 | 75,6 | 82,5 |
| Kat.-Temp. (°C) | 100 | 110 | 120 | 90 |
| Druck Abs. (bar) | 1 | 1 | 1 | 1 |
| Verweilzeit (sec.) | 60 | 60 | 25 | 25 |

| Produktzusammensetzung (Mol-%): | | | | |
|---|---|---|---|---|
| MeSiH₃ | 21,5 | 6,4 | 3,2 | 2,7 |
| MeSiH₂Cl | 20,0 | 16,2 | 10,6 | 7,2 |
| MeSiHCl₂ | 3,8 | 11,5 | 10,9 | 7,4 |
| MeSiCl₃ | 0,2 | 0,8 | 0,7 | 0,2 |
| Me₂SiH₂ | 2,0 | 2,0 | 1,6 | 0,9 |
| Me₂SiHCl | 24,0 | 30,8 | 24,9 | 18,2 |
| Me₂SiCl₂ | 29,5 | 32,2 | 49,2 | 63,5 |

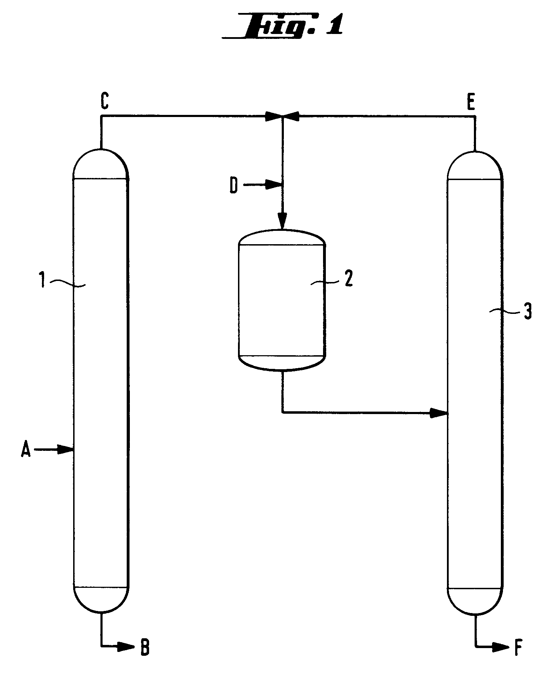

### Beispiel 5 (siehe Figur 1):

a) Hochdisperse Kieselsäure in Kugelform vom Durchmesser 3 - 5 mm, KC-Siliperl AF 125 (Kali-Chemie, Hannover, BRD), wurde mit einer 50 %igen Lösung von 3-Trimethoxysilylpropyloctadecyldimethyl-ammoniumchlorid in Methanol versetzt und mehrere Stunden in Toluol-Rückfluß gekocht. Anschließend wurde von den Solventien abfiltriert und der nunmehr funktionalisierte Träger bei 100°C im Vakuum getrocknet.
b) In einer Versuchsanlage 1 aus V4A-Stahl, welche in den wesentlichen Teilen aus einer regelbaren Dosierpumpe, einem Verdampfer, einer Füllkörperkolonne mit 2,5 m Gesamtlänge und 50 mm Innendurchmesser, einem Kolonnenkopf mit Kühler, einer Destillationsblase mit 5 l Inhalt sowie einer Vorrichtung zur Druckkonstanthaltung und Entleerung des Sumpfes bestand, wurden aus einem Vorratsgefäß mittels einer Dosierpumpe 825 g/h Methyldichlorsilan A, das in einem Verdampfer kontinuierlich verdampft wurde, bei einem Absolutdruck von 7 bar in den unteren Kolonnenteil zugeführt.
   Das in die mit Katalysator, dessen Herstellung oben unter a) beschrieben ist, befüllte Kolonne 1 eintretende, auf 95°C vorgeheizte Methyldichlorsilan disproportionierte, wobei sich das entstehende Reaktionsgemisch gleichzeitig auftrennte. Das gebildete höhersiedende Methyltrichlorsilan (357 g/h) und nicht umgesetztes Methyldichlorsilan (411 g/h) B sammelten sich im Sumpf, aus dem sie in einen Vorratsbehälter ausgetragen wurden. Die Leichtsieder gingen in der Kolonne unter weiterer Reaktion nach oben. Die Temperaturen in der Kolonne betrugen im Sumpf 122°C und am Kopf 2°C. Das gebildete Dampfgemisch C wurde am Kolonnenkopf abgezogen und zusammen mit 600 g/h Dimethyldichlorsilan D bei 2 bar (abs.) durch ein mit dem Katalysator "Deloxan^{R} AMPI-3", der in Beispiel 3 beschrieben wurde, halb befülltes, auf 100°C thermostatisiertes Rohr 2 von 10 cm Durchmesser und 50 cm Länge geleitet; das gasförmige Reaktionsprodukt wurde mittels eines Kühlers kondensiert und bei Atmosphärendruck in der Mitte einer Rektifikationskolonne 3, welche von den Dimensionen her der ersten entsprach, jedoch mit V4A-Metallwendeln von 5 mm Durchmesser befüllt war, eingeleitet. Die Leichtsieder Methylsilan, Dimethylsilan und Methylchlorsilan E wurden am Kolonnenkopf abgenommen und dem Reaktor 2 zugeführt. Dem Sumpf der Kolonne 3 wurden kontinuierlich 655 g/h eines Silan-Gemisches F folgender Zusammensetzung entnommen:
   36,0 Gew.-% Dimethylchlorsilan
   42,6 Gew.-% Dimethyldichlorsilan
   19,2 Gew.-% Methyldichlorsilan
   2,3 Gew.-% Methyltrichlorsilan
   Zur Auftrennung der Silane wurde das Gemisch destillativ aufgearbeitet.

### Beispiel 6:

Die in Figur 1 abgebildete und im Beispiel 5 beschriebene Versuchsanlage wurde verwendet. Im Gegensatz zu Beispiel 5 wurde die Kolonne 1 nicht mit dem heterogenen Katalysator sondern mit V4A-Stahl-Interpak-10-Füllkörpern befüllt und 10 cm unterhalb des Kolonnenkopfes wurden 50 g/h Methyltrioctylammoniumchlorid (käuflich erwerblich unter dem Handelsnamen "Aliquat 336" bei der Fa. Henkel) zudosiert. Der Zulauf A bestand aus 1 kg/h Methyldichlorsilan. Der Sumpfaustrag B setzte sich aus 30 g/h Methylchlorsilan, 570 g/h Methyldichlorsilan, 350 g/h Methyltrichlorsilan und der zudosierten Menge des homogenen Katalysators Methyltrioctylammoniumchlorid zusammen. (Durch Abtrennen der Silane, beispielsweise durch einen Dünnschichtverdampfer, kann der homogene Katalysator wieder zurückgewonnen werden.) Der Gesamtdruck der Kolonne 1 betrug 7 bar (abs.), die Temperatur im Sumpf 125°C und am Kolonnenkopf 1 bis 5°C. Das Kopfprodukt C wurde zusammen mit 560 g/h Dimethyldichlorsilan D und dem Kopfprodukt der Kolonne 3 gasförmig in den mit dem Katalysator "Deloxan^{R} AMPI-3", der in Beispiel 3 beschrieben wurde, halb befüllten Reaktor 2 (100°, 2 bar) eingespeist. Wie in Beispiel 5 beschrieben, wurde das austretende Gasgemisch kondensiert und in der Rektifikationskolonne 3 in einen Leichtsiederstrom E und ein Schwersieder-Silan-Gemisch F (610 g/h) aufgetrennt. Das Silan-Gemisch F (610 g/h) hatte folgende Zusammensetzung:
32,2 Gew.-% Dimethylchlorsilan
48,6 Gew.-% Dimethyldichlorsilan
17,8 Gew.-% Methyldichlorsilan
1,5 Gew.-% Methyltrichlorsilan
Zur Auftrennung der Silane wurde das Gemisch destillativ aufgearbeitet.

## Patentansprüche

1. Verfahren zur Herstellung von Dimethylchlorsilan durch Komproportionierung von Dimethyldichlorsilan mit Methylchlorsilan und/oder Methylsilan in Gegenwart eines Katalysators, dadurch gekennzeichnet, daß als Katalysator ein ungeformter oder ein in Kugelform vorliegender Katalysator verwendet wird, der eine polymere, gegebenenfalls vernetzte Organosiloxanammoniumverbindung mit kieselsäureartigem Grundgerüst ist, bestehend aus Einheiten der allgemeinen Formel 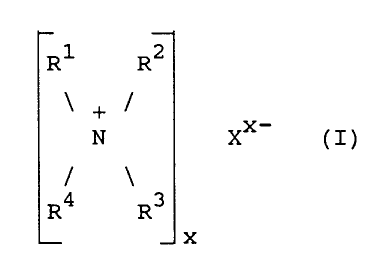 in welcher R¹ und R² gleich oder verschieden sind und eine Gruppe der allgemeinen Formel 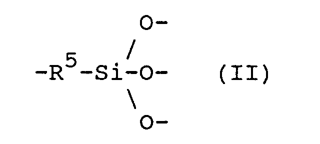 bedeuten, wobei die Stickstoffatome in (I) über die Reste R⁵ mit den Siliciumatomen in (II) verbunden sind und R⁵ eine Alkylengruppe mit 1 bis 10 Kohlenstoffatomen, eine Cycloalkylengruppe mit 5 bis 8 Kohlenstoffatomen oder eine Einheit der allgemeinen Formel 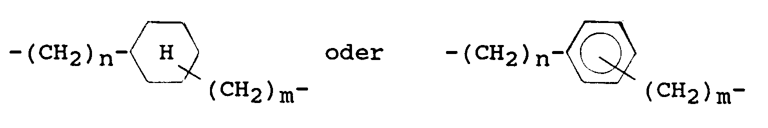 darstellt, in der n eine Zahl von 1 bis 6 ist und die Zahl der stickstoffständigen Methylengruppen angibt und m eine Zahl von 0 bis 6 ist, und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder 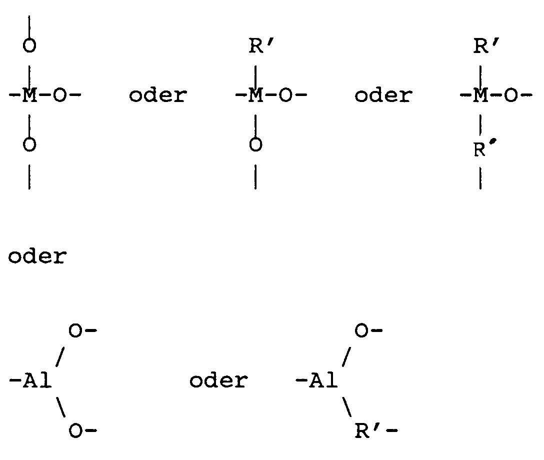 abgesättigt sind, wobei M ein Silicium-, Titan- oder Zirkoniumatom und R' eine lineare oder verzweigte Alkylgruppe mit 1 bis 5 Kohlenstoffatomen ist und das Verhältnis der Siliciumatome aus den Gruppen der allgemeinen Formel (II) zu den Metallatomen in den Brückengliedern 1 : 0 bis 1 : 10 beträgt, und in welcher R³ und/oder R⁴ gleich R¹ und R² ist oder Wasserstoff, eine lineare oder verzweigte Alkylgruppe aus 1 bis 20 Kohlenstoffatomen, eine aus 5 bis 8 Kohlenstoffatomen bestehende Cycloalkylgruppe oder die Benzylgruppe ist, und X ein Anion mit der Wertigkeit von x gleich 1 bis 3 aus der Gruppe Halogenid, Hydroxid, Hypochlorit, Sulfat, Hydrogensulfat, Nitrit, Nitrat, Phosphat, Dihydrogenphosphat, Hydrogenphosphat, Carbonat, Hydrogencarbonat, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluoroborat, Tetraphenylborat, Hexafluorophosphat, Formiat, Acetat, Propionat, Oxalat, Trifluoroacetat, Trichloracetat oder Benzoat ist.
